# EUROPEAN PATENT APPLICATION

(11) **EP 2 239 514 A1**
(43) Date of publication of application: **13.10.2010**
(21) Application number: 09156638.0
(22) Date of filing: 30.03.2009
(51) Int. Cl.: F24D 17/00, F24D 19/10

(54) **Water saving system when demanding hot water**

(71) Applicant: Huet, Alain Paul Arthur, 2311 TM Leiden (NL)
(72) Inventor: Huet, Alain Paul Arthur, 2311 TM, Leiden (NL); Huet, Robert Walter, 3242 BB, Oegstgeest (NL); Botter, Bob, 3641 PT, Mijdrecht (NL)
(74) Representative: Volmer, Johannes Cornelis

(57) **Abstract**

The invention relates to a water saving system when demanding hot water (10) for supplying hot water to a hot water tap (38). This system (10) comprises a hot water supply (12) having a means for heating water, an inlet (14) for feeding water to be heated to the hot water supply (12) and an outlet (28) connected to a supply tube (30). The supply tube (30) is provided with a three-way valve (34), one outlet (36) thereof being connected to the hot water tap (38) and one outlet (44) to a return conduit (46) provided with a pump means (50) and connected to the inlet (14) of the hot water supply (12). A control device (56) is present for controlling the three-way valve (34) and the pump means (50) based on data received from a temperature sensor (52) for measuring the temperature of the water in the supply tube (30).

## Description

The present invention relates to a water saving device related to a hot water system for supplying hot water to a hot water tap, as well as to an installation kit.

Various systems for supplying hot water from a hot water supply such as a (combination) boiler to a hot water tap or other delivery device are known in the art. E.g. in order to reduce water loss due to water running down the drain while waiting for hot water to be delivered to a hot water tap from a remote hot water supply, hot water systems having a hot water circulation facility have been devised, which continuously circulate hot water from a hot water source to the tap and back to the hot water source. This kind of system is often used in hotels and like accommodations, such that always immediately hot water is available at all hot water taps. Although such a system might save water, it is not energy efficient because the water is maintained at a minimum temperature even if hot water is not demanded at any tap. Furthermore energy loss will occur due to thermal radiation from the supply and circulation conduits.

Another type of hot water system e.g. known from US-A-4 201 518 and DE-A1-197 25 704 comprises a time delay circuit, which is manually actuated, e.g. by a push button. In such a system a circulation pump is activated by the time delay circuit for a predetermined time period. During this time period the circulation pump pumps water through a circulation loop wherein the tap and hot water supply are incorporated. After expiry of this period water can be taken from the tap. To prevent unnecessary operation of the pump, a thermostatically controlled switch may be coupled to the return pipe to override any signals from the time delay circuit, if the water in the return pipe is at or above some minimum temperature determined by the setting of the thermostat.

In domestic situations at positions remote from the hot water source, frequently a separate additional warm water supply such as a kitchen boiler is used in order to have hot water available directly upon demand. However, the volume and/or heating capacity of these additional warm water supplies are small as wel as continuously using energy to heat the water and maintain its temperature even if none is demanded. When the additional supply is insufficient, one has to use the main supply resulting in water loss due to water running through the drain until hot water is received at the hot water tap or otherwise one has to wait until a fresh quantity of water has been heated. In bathrooms the situation is even worse. If one wants to take a shower, one turns on the hot water tap and while the water is running, often one does a lot of other things resulting in additional or excess water loss.

These known systems have several drawbacks. One drawback concerns the fact that the circulation pump is operated for a predetermined time period. However, depending on the starting temperature of the water remaining in the supply conduit between the hot water supply and the tap, either the water may still not have the required temperature after the predetermined period of time if the starting temperature is too low, or the required water temperature is achieved far before the predetermined period of time has expired, resulting in undesirably continued operation of the circulation pump and therefore to excess energy consumption and unnecessary waiting time for the user. A further drawback is that the time delay circuit needs to be activated manually such as in US -A-4,201,518 and DE-A1-197 25 704 or by a sensor detecting the presence of a potential user of the hot water tap such as also disclosed in DE-A1-197 25 704. In the first embodiment a user easily forgets to operate the time delay circuit thereby reducing the efficiency of the system. In the second embodiment the system will start to operate even if the human being does not want to use the hot water tap.

Therefore it is an object of the invention to provide a water saving device when demanding hot water (further referred to as - water saving system) that does not show these drawbacks or at least to a lesser extent. A particular object of the invention is to provide a water and energy efficient hot water system.

Water saving system according to the invention is defined in claim 1. Preferred embodiments are claimed in the dependent claims.

The water saving system according to the invention comprises a hot water supply or source, which is provided with a means for heating water to a predetermined temperature. Usually the predetermined temperature can be adjusted. The hot water supply has an inlet for feeding water to be heated and an outlet for delivering heated water to a hot water tap. The outlet is connected to the tap by suitable tubing, wherein a three-way valve is incorporated upstream of the hot water tap. The inlet of the three-way valve is connected to said tubing, while one outlet thereof is connected to the hot water tap via a connecting conduit. The other outlet of the three-way valve is connected to a circulation conduit, wherein a pump means is incorporated. The other end of the circulation conduit is connected to the inlet of the hot water supply. The three-way valve and the pump are operated by a control device, which receives data from a temperature sensor that measures the temperature of the water in the supply tube.

The system according to the invention operates as follows. Upon demand of hot water at the hot water tap, the control device is activated. It receives actual water temperature data from the temperature sensor. If the actual water temperature in the supply tube between the hot water source and the tap is at least equal to the predetermined temperature, the hot water tap will deliver hot water. However, if the actual water temperature is lower than a predetermined temperature, the control device will switch the three-way valve to a circulating position such that the supply tube becomes in fluid communication with the return conduit. The control device will also turn on the pump means. Thereby a loop is temporarily created. Said loop comprises the hot water supply, the supply tube, the three-way valve, the return conduit and its associated pump means. The water contained in this loop will circulate while being heated by the heating means of the hot water supply, until the temperature sensor signals that the hot water has reached the predetermined temperature. Then the control device will switch the three-way valve from its circulating position to its water delivery position, turn off the pump means and hot water will start to flow from the hot water tap. Because according to the invention the actual water temperature is measured, the risk of delivering still too cold water like the systems described above is nihil. Also the chance of unnecessary operation of the pump means is eliminated. Thus the water saving system according to the invention is both water efficient and energy efficient and comprises an improvement over the prior art systems in view of user-friendliness and in view of certainty of water and energy savings.

Advantageously the three-way valve is positioned as close as possible to the hot water tap. This reduces the amount of water contained in the piping between the three-way valve and the hot water tap.

In a preferred embodiment the water saving system also comprises a means for detecting operation of the hot water tap, which means actuate the control device. Upon demand of hot water at the hot water tap, this detection means triggers the control device. Thus an automatically operated water saving system when demanding hot water is provided without the need of a separate manual actuation of a time delay circuit as taught in the above described prior art. A reliable detection means is a pressure (difference) sensor which senses a pressure difference when the tap is opened.

In a further preferred embodiment the water saving system also comprises a second three-way valve, controlled by the control device, a first inlet thereof being connected to the return conduit, a second inlet thereof being connected to a cold water source such as a municipal water supply system and the outlet being connected to the inlet of the hot water supply. This second three-way valve is also controlled by the control device. Upon demand of hot water and detection of a too low water temperature the control device also switches this three-way valve to a circulation position such that the intake of fresh water from a cold water source by the hot water supply is interrupted and only water circulating in the loop described above is fed to the hot water supply in order to be heated.

The water saving system according to the invention can be easily integrated in houses to be built. It is also suitable for use within existing homes, in particular between the hot water tap of a shower cabin and/or kitchen sink and a combination boiler or other hot water generating device.

Therefore the invention also relates to an installation kit comprising a supply tube to be connected to a hot water supply, the supply tube being provided with a three-way valve, one outlet thereof is to be connected to a hot water tap and one outlet is connected to a return conduit provided with a pump means, which return conduit is to be connected to an inlet of the hot water supply, a control device for controlling the three-way valves and the pump means based on data received from a temperature sensor for measuring the temperature of the water in the supply tube. The preferred embodiments discussed above are similarly applicable to the installation kit according to the invention.

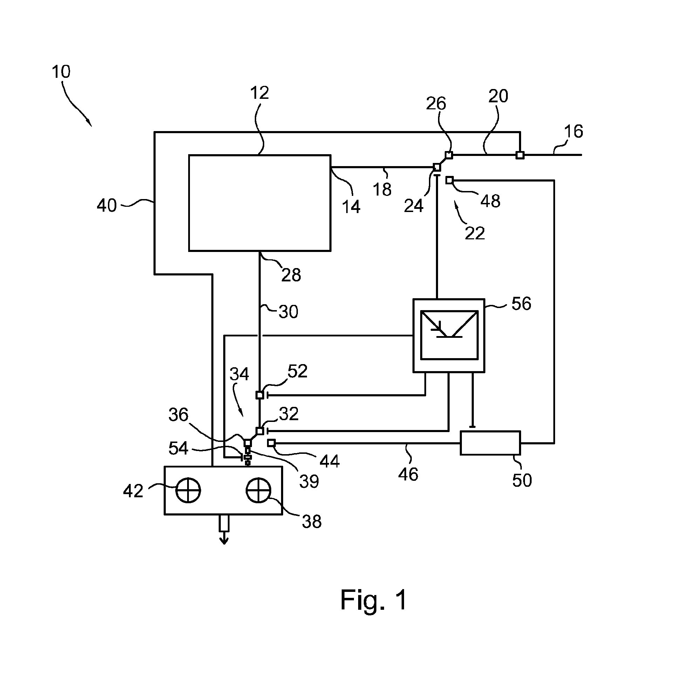

The invention will be illustrated in more detail by means of the attached drawing, which shows an embodiment of a water saving system when demanding hot water.

As shown an embodiment of a water saving system according to the invention, indicated in its entirety by reference numeral 10, comprises a hot water supply 12 having heating means such as a combination boiler. An inlet 14 of the hot water supply is connected to a main water conduit 16 such as the municipal water supply, by means of tubing 18 and 20 respectively wherein a "second" three-way valve 22 is incorporated. Tubing 18 is positioned between an outlet 24 of the three-way valve 22 and the inlet 14 of the hot water supply 12. A "second" inlet 26 of the three-way valve 22 is connected to the main water conduit 16 via tubing 20. An outlet 28 of the hot water supply 12 is connected to a tap supply conduit 30, which at its opposite end is connected to an inlet 32 of a "first" three-way valve 34. One outlet 36 thereof is connected to a hot water tap 38 via a connecting piece 39. A cold water supply conduit 40 connects a cold water tap 42 to the main water supply 16. A second outlet 44 of the first three-way valve 34 is connected to a return conduit 46, which on its turn via a pump 50 is coupled to an other ("first") inlet 48 of the second three-way valve 22. Near the first three-way valve 34 a temperature sensor 52 is arranged for measuring the temperature of water contained in the tap supply conduit 30. A pressure sensor 54 detects whether the hot water tap 38 is opened. A control device 56 is provided for receiving a signal from the pressure sensor 54 that the hot water tap is opened. Control device 56 also receives a signal from the temperature sensor 52. If the measured water temperature is lower than a predetermined value, the control device 56 drives the pump 50 and switches the first and second three-way valves 34 and 22 respectively to a circulation position, such that a loop is created comprising the hot water supply 12, hot water tap conduit 30, return conduit 46 and tubing 18. Once the temperature of the water circulating in the loop has risen to a required temperature, the control device 56 switches the three-way valves 22 and 34 back into their normal delivery position as shown. The pump 50 is turned down.

## Claims

1. Water saving system (10) for supplying hot water to a hot water tap (38), comprising a hot water supply (12) having a means for heating water, an inlet (14) for feeding water to be heated to the hot water supply (12) and an outlet (28) connected to a supply tube (30), the supply tube (30) being provided with a three-way valve (34), one outlet (36) thereof being connected to the hot water tap (38) and one outlet (44) to a return conduit (46) provided with a pump means (50) and connected to the inlet (14) of the hot water supply (12), a control device (56) for controlling the three-way valve (34) and the pump means (50) based on data received from a temperature sensor (52) for measuring the temperature of the water in the supply tube (30).

2. Water saving system according to claim 1, further comprising a means (54) for detecting operation of the hot water tap (38), which means actuate the control device (56).

3. Water saving system according to claim 2, wherein said means (54) comprises a pressure sensor.

4. Water saving system according to one of the preceding claims, further comprising a second three-way valve (22), controlled by the control device (56), a first inlet (48) thereof being connected to the return conduit (46), a second inlet (26) thereof being connected to a cold water source (16) and the outlet (24) being connected to the inlet (14) of the hot water supply (12).

5. Water saving system according to one of the preceding claims, wherein the hot water supply (12) comprises a boiler, a combination boiler or a gas or electric water heater.

6. Installation kit comprising a supply tube (30) to be connected to a hot water supply (12), the supply tube (30) being provided with a three-way valve (34), one outlet (36) thereof to be connected to a hot water tap (38) and one outlet (44) is connected to a return conduit (46) provided with a pump means (50), which return conduit (46) is to be connected to an inlet (14) of a hot water supply (12), a control device (56) for controlling the three-way valve (34) and the pump means (50) based on data received from a temperature sensor (52) for measuring the temperature of the water in the supply tube (30).
